# EUROPEAN PATENT APPLICATION

(11) **EP 1 083 561 A2**
(43) Date of publication of application: **14.03.2001**
(21) Application number: 00402385.9
(22) Date of filing: 29.08.2000
(51) Int. Cl.: G11B 21/10, G11B 19/04, G11B 5/596

(54) **System and method for automated track follow exception monitoring**

(30) Priority: 07.09.1999 US 390727
(71) Applicant: Iomega Corporation, Roy, Utah 84067 (US)
(72) Inventor: Jackson, Paul, Hooper, UT 84315 (US); Larsen, Troy, North Ogden, UT 84414 (US)
(74) Representative: Cabinet Hirsch

(57) **Abstract**

Performance improvement during a track following operation in a disk drive is achieved by dedicating hardware to monitor specific anomalies during track following and to interrupt the processor only when specific, programmable criteria have been violated. An exemplary system comprises a servo miscue detector for checking (100) a servo sector for a miscue; a miscue counter coupled to the servo miscue detector for counting (110) a number of miscues; counter reset logic (105) coupled to the miscue counter; a comparator for comparing (115) the number of miscues to a predetermined threshold to generate an output; generate interrupt logic for generating (120) a microprocessor interrupt responsive to the output of the comparator; and a microprocessor to initiate an error recovery sequence (125) responsive to the controller. The servo miscue detector, the miscue counter, the counter reset logic, the comparator, and the generate interrupt logic are implemented in hardware.

## Description

### FIELD OF THE INVENTION

The present invention relates in general to disk drive data storage devices. More particularly, the present invention relates to systems and methods for improving the monitoring of track following of a servo system for positioning a read/write head with respect to a track on a disk drive data storage device.

### BACKGROUND OF THE INVENTION

Disk drives are used as information-storing media for recording massive amounts of information used in computers. Disk drives use magnetic recording disks, with each disk having a number of concentric tracks formed thereon for magnetically recording and storing data and information. Each track includes a number of sectors. A magnetic head for reproducing and recording is positioned on the desired track to reproduce information from the disk and record information to the disk.

In conventional computer data storage systems having a rotating storage medium, data is stored in a series of concentric or spiral tracks across the surface of the disk. The storage medium can comprise, for example, a disk having a surface on which a magnetic material is deposited, such as conventional magnetic disks or magneto-optical disks. The data stored on a disk is represented as a series of variations in magnetic orientation of the disk magnetic material. The variations in magnetic orientation, generally comprising reversals of magnetic flux, represent binary digits of ones and zeroes that in turn represent data. The binary digits must be read from the disk surface by a magnetic head transducer suspended over the disk surface that can detect the variations in magnetic orientation as the disk rotates relative to the magnetic head at thousands of revolutions per minute and generate a fluctuating data signal.

Conventionally, the magnetic head is mounted on a disk arm that is moved by a servo. A disk drive servo control system controls movement of the arm across the surface of the disk to move the head from track to track and, once over a selected track, to maintain the magnetic head in a path over the centerline of the track. In a track seek operation, the magnetic head is moved over the disk to a desired track. To accurately position the magnetic head at the desired track, it is necessary to determine the track number beneath the head as the disk rotates and the head is moved across the disk. When the head reaches the desired track, the servo system commences a track following function in which it accurately positions the head over the centerline of the selected track and maintains it in that position so that the head can record a series of data bits or, alternatively, retrieve a series of bits from the track as the disk rotates under the head.

A disk drive is required to determine the position of the head moving on the disk because they must carry out magnetic reproduction and storage in any position of a plurality of disks. It is preferable to use a digital sector servo control system to maintain a read/write head precisely over a desired track during a read or write operation. This is accomplished by utilizing prerecorded servo information, which is angularly spaced and interspersed among the data information on each of the disk surfaces of a disk. Servo information can be prerecorded on either a dedicated servo surface or on servo sectors located on each disk surface or on a combination of both. The prerecorded servo information is normally written to the disks by a servowriter at the factory. The prerecorded servo information is read from the disks, demodulated, and processed by the servo control system. The results are then applied to the input of the servo electronics which control the current to the actuator and thus the radial position of the head(s) over the disk surface. All of these mechanisms for servo control information are well known to those of ordinary skill in the art.

The operation of moving the head to a desired track is called seeking. The operation of maintaining the head over the centerline of a particular track is called track following. During both seeking and track following operations, the prerecorded servo information is sensed by the head and demodulated to generate a digital gray code and a position error signal (PES). The digital gray code includes track identification information and the PES indicates the position of the head away from the centerline of a track (i.e., an offset from the center of the track). Typically, the digital gray code and the PES are combined together to generate a measured position signal. The measured position signal is then used in a servo feedback loop to generate a control signal to move the head back to the centerline of the target track.

During a servo track following operation, miscues from the servo mechanism can occur. These miscues include missed servo gaps (a timing synchronization error such as an early servo gap or a late servo gap, that indicates that the motor speed is not proper), position offset errors, and misread gray codes. Typically, a single miscue is not reason to interrupt the track following operation and initiate a recovery sequence. Instead, a specified number of consecutive such anomalies occurs before it is deemed desirable to drop out of the track following operation and go back and start the seek operation.

The detection of miscues in the prior art is performed by software executed by the microprocessor. Typically, in the prior art, at every servo sector, an interrupt is initiated, and at each interrupt, samples are taken to determine if a servo miscue has occurred. If so, and optionally if the number of miscues exceeds a predetermined threshold, an error recovery sequence is activated. In any event, processing continues with a return from the interrupt. This conventional technique uses about 20% of the processor's bandwidth. Thus, during a track following operation, the microprocessor primarily typically performs operations involving the transfer of data while also monitoring and maintaining information about the servo mechanism conditions. This results in the disadvantage of a decrease in the processor's available bandwidth.

Accordingly, there is a need for improved track following systems and methods for providing miscue detection at a reduced microprocessor bandwidth cost.

### SUMMARY OF THE INVENTION

The present invention is directed to systems and methods for monitoring a track following operation of a servo system of a disk drive. An exemplary system comprises a servo miscue detector for checking a servo sector for a miscue; a miscue counter coupled to the servo miscue detector for counting a number of miscues; counter reset logic coupled to the miscue counter; a comparator for comparing the number of miscues to a predetermined threshold to generate an output; generate interrupt logic for generating a microprocessor interrupt responsive to the output of the comparator; and a microprocessor to initiate an error recovery sequence responsive to the microprocessor interrupt. The servo miscue detector, the miscue counter, the counter reset logic, the comparator, and the generate interrupt logic are implemented in hardware.

According to one aspect of the present invention, the counter reset logic resets the miscue counter if a miscue is not detected by the servo miscue detector.

In accordance with another aspect of the present invention, the generate interrupt logic generates a microprocessor interrupt if the number of miscues exceeds the predetermined threshold.

Another embodiment within the scope of this invention includes a method of monitoring the track following of a servo system in a disk drive, comprising: checking a servo sector for a miscue; incrementing a miscue counter if there is a miscue, otherwise resetting the miscue counter; determining if the value of the miscue counter exceeds a predetermined threshold; and generating a processor interrupt if the value of the miscue counter exceeds the predetermined threshold.

The foregoing and other aspects of the present invention will become apparent from the following detailed description of the invention when considered in conjunction with the accompanying drawings.

### BRIEF DESCRIPTION OF THE DRAWINGS

Figure 1 is a perspective view of an exemplary disk drive in which the present invention is embodied;
Figure 2A is a perspective view of a disk cartridge for use with the disk drive of Figure 1;
Figure 2B is a bottom view of the disk cartridge of Figure 2A;
Figure 2C shows a disk-shaped storage media of the disk cartridge of Figure 2A containing an exemplary data structure;
Figure 3 is a block diagram illustrating further details of the disk drive of Figure 1; and
Figure 4 is a flow diagram illustrating an exemplary method of track following with servo miscue detection and interrupt generation in accordance with the present invention.

### DESCRIPTION OF EXEMPLARY EMBODIMENTS AND BEST MODE

The present invention provides performance improvement during a track following operation by dedicating hardware to monitor specific anomalies during track following and to interrupt the processor only when specific, programmable criteria have been violated. Those skilled in the art will readily appreciate that the description given herein with respect to the figures is for explanatory purposes only and is not intended in any way to limit the scope of the invention.

Throughout the description, the invention is described in connection with a removable media disk drive. However, the particular disk drive and cartridge shown only illustrate the operation of the present invention and are not intended as limitations. Aspects of the invention are equally applicable to other disk drives including linear or rotary actuator disk drives, fixed medium drives, and removable medium disk drives as well as differently sized and shaped disks and disk cartridges. Accordingly, the invention should not be limited to the particular drive or disk embodiment shown as the invention contemplates the application to other drive and disk types and configurations. Throughout the following detailed description similar reference numbers refer to similar elements in the figures of the drawings. In the following description, numerous specific details are set forth in order to provide a thorough understanding of the present invention. However, it will be obvious to one of skill in the art that the invention may be practiced without these specific details. In other instances, well known elements and processing techniques have not been shown or described in particular detail in order to avoid unnecessarily obscuring the present invention.

The present invention uses digital hardware facilities to monitor the servo track following operation and servo exception generation and to decrease the number of interrupts that are generated. The hardware facilities free the microprocessor from having to monitor the servo operation during the track following operation, thereby avoiding a typically computer-intensive situation. The hardware facilities include the monitoring signals, counters, programmable threshold registers, counter reset logic, and interrupt generation logic.

The automated track following facility monitors servo miscue operations such as missed servo gaps, misread gray codes, and position offset errors. The consecutive number of miscues is counted and compared against a programmable, predetermined threshold. Once the threshold is exceeded, an interrupt is generated to the microprocessor. Thus, when a consecutive number of either missed servo gaps, misread gray codes, or position offset errors exceeds the number programmed into the corresponding threshold register, a processor interrupt is generated. If a good condition is observed (e.g., gap found, good gray code read, correct position offset sampled) before the threshold value is reached in the counter, the counter resets, and no interrupt is generated.

Thus, the present invention monitors the consecutive numbers of missed servo gaps, misread servo gray codes, and servo fields passed while the servo position is detected as being off-track (offset errors). When a threshold is exceeded, a processor interrupt is generated. It should be noted that other types of miscues can be detected and counted in accordance with the present invention, and the preferred threshold is three.

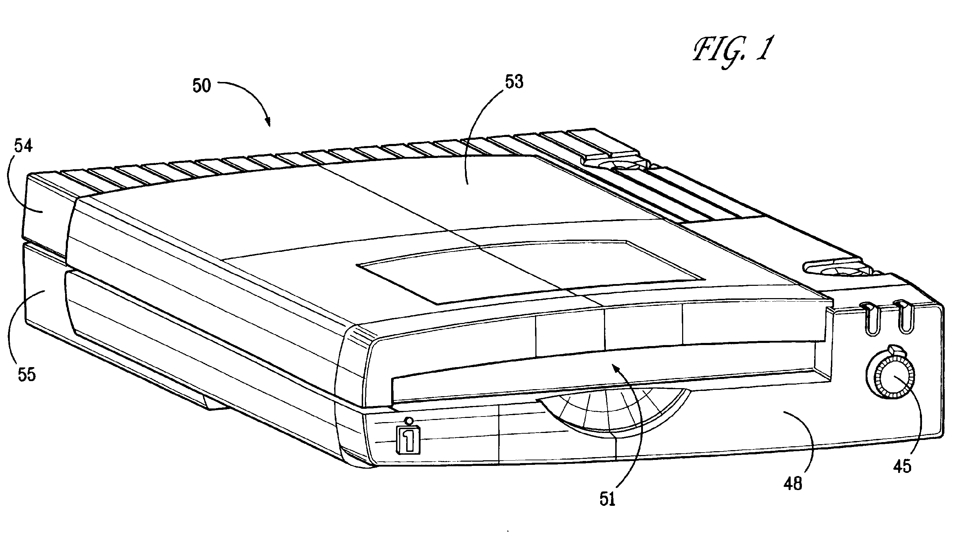

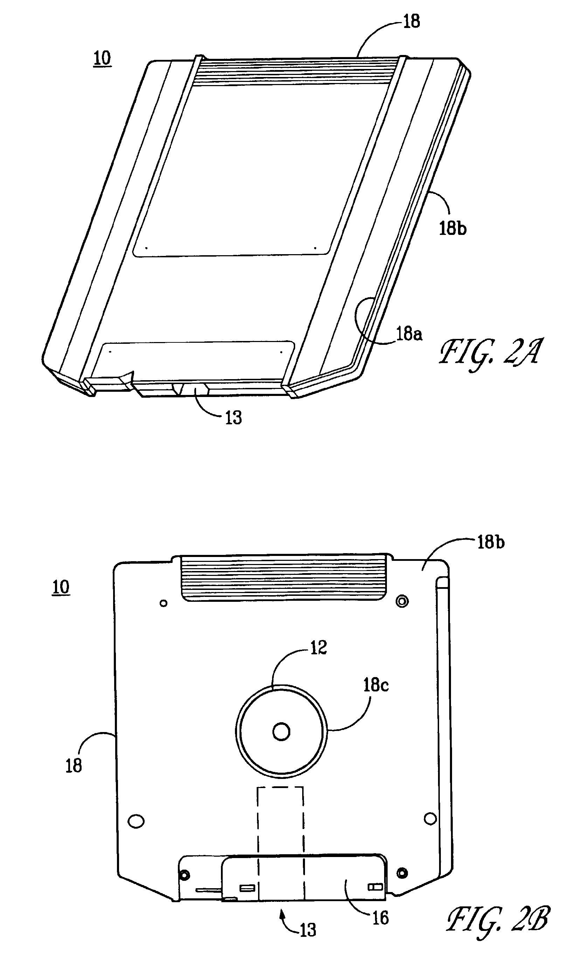

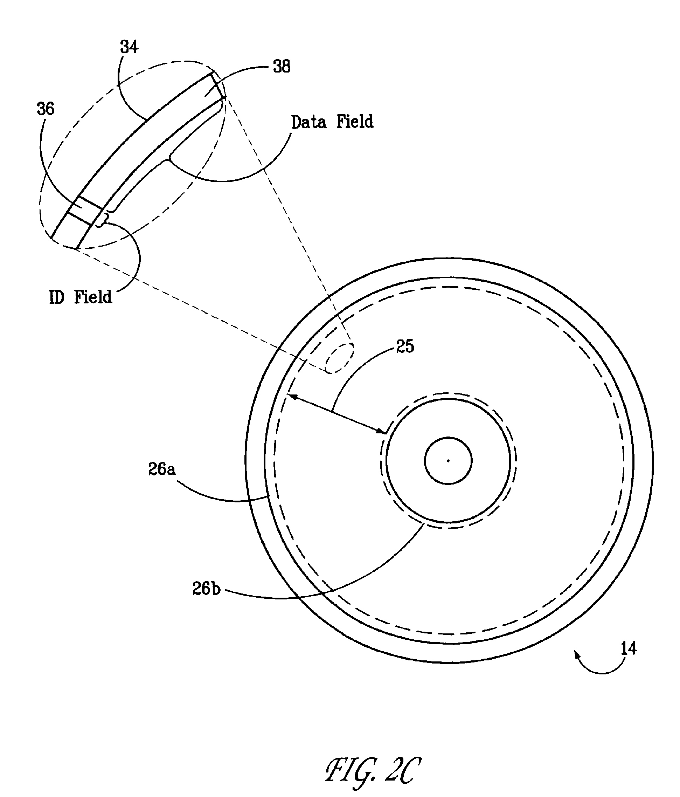

Figures 1, 2A, and 2B are drawings of an exemplary disk drive device 50 and disk 10 for use with the present invention. The drive 50 may be the Iomega ZIP™ drive which is disclosed and claimed in the U.S. patents identified in U.S. Patent 5,638,228, as modified in accordance with the present invention. The drive 50 may be adapted for removable connection to a computer device or may be built-in to a computer device (not shown). The drive 50 may have a protective case, such as protective case 53, having an upper case 54 and a lower case 55, which forms an interior space for accepting disk cartridge 10 or a cartridgeless media, such as an optical compact disk (CD). The upper case 54 and lower case 55 are preferably formed from molded plastic. The lower case 55 has a bottom surface and side surfaces, and upper case 54 is formed so that it covers the top of lower case 55. The width of the case 53 is sized accordingly such that space is available within case 53 to accommodate a disk cartridge as well as a disk drive mechanism and an electronics system. A disk cartridge 10 can be inserted into the disk drive 50 through a horizontal opening 51 in the front panel 48 of the disk drive 40. An eject button 45 is also provided on the front panel 48 for automatically ejecting a disk cartridge from the disk drive 40.

Figures 2A and 2B show an exemplary disk cartridge 10 adapted for use in the disk drive 50 of Figure 1. As shown, the disk cartridge 10 comprises an outer casing 18 having upper and lower shells 18a, 18b that mate to form the casing. A disk-shaped recording medium (shown as element 14 in Figure 2C) is affixed to a hub 12 that is rotatably mounted in the casing 18. An opening 18c on the bottom shell 18b of the casing 18 provides access to the disk hub 12. A head access opening 13 in the front peripheral edge of the disk cartridge 10 provides access to the recording surfaces of the disk by the recording heads of the disk drive. A shutter 16 is provided on the front peripheral edge of the disk cartridge 10 to cover the head access opening 13 when the cartridge is not in use. When the cartridge is inserted into the disk drive, the shutter 16 moves to the side exposing the head access opening 13 and thereby providing the heads of the drive with access to the recording surface of the disk. In the present embodiment, the casing houses a flexible or floppy magnetic disk, however, in other embodiments, the disk may comprise a rigid magnetic disk, a magneto-optical disk or an optical storage medium.

Referring now to Figure 2C, an exemplary disk-shaped storage media 14 in accordance with the present invention is depicted. The storage media 14 comprises a disk having a magnetic coating for writing and reading information to and from the storage media 14. Preferably, information can be written on both sides of the storage media 14. While magnetic media is preferred, other media can be employed, and the present invention is by no means limited to use of magnetic storage media.

In a preferred embodiment, the storage media 14 has a band of concentric data tracks 25 which can be written to, and read from, a user's host computer device, such as a computer, a digital camera, or the like. The concentric data tracks 25 may have a variety of track densities. In addition to the data tracks 25, preferably there are at least two special information tracks 26a, 26b on each side of the storage media (only one side is shown in Figure 2C), called Z-tracks, that contain information, such as the defect characteristics of that particular storage media. The information contained on these tracks is preferably identical and, in fact, is preferably repeated in at least two separate locations on each track 26a, 26b. This redundancy helps to ensure that the information is available, even if some areas of the storage media 14 become damaged and unreadable.

Each data track in the band of data tracks 25 preferably contains sectors 34 that comprise an ID field 36 and a data field 38. The ID field 36 is used to identify the sector 34 and distinguish it from other sectors in the track.

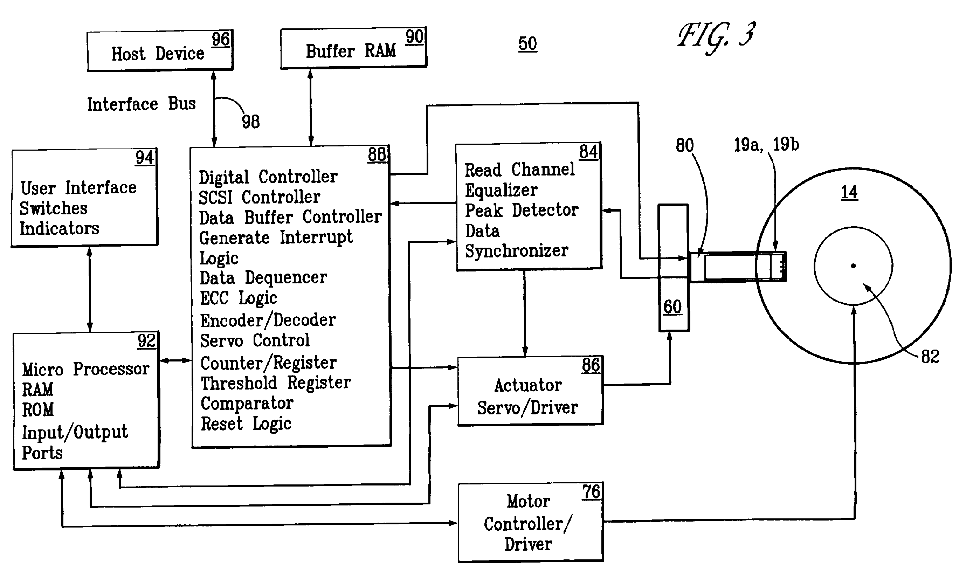

Figure 3 is a block diagram of the electronic components of an exemplary disk drive 50 in accordance with the present invention. As shown, the disk drive 50 comprises a spindle motor 82, motor controller/driver 76, read/write heads 19a, 19b, read/write pre-amp 80, read channel 84, actuator 60, actuator servo/driver 86, digital controller 88, random access memory (RAM) buffer 90, microprocessor 92 and user interface components 94. The disk drive 50 connects to a user's host device 96 through an interface bus 98.

The motor controller/driver 76 and spindle motor 82 rotate the storage media of the cartridge 10 at a constant speed, allowing the read/write heads 19a, 19b to "fly" close to the rotating storage media for a stable recording environment.

The read/write pre-amp 80 amplifies the signals picked up by the heads 19a, 19b during read operations and switches current in the heads 19a, 19b during write operations. The read channel 84 shapes the pulses from the pre-amp 80, qualifies the peaks that represent the user data and special information, and generates a clock that is synchronous with the data coming off the storage media.

The actuator servo/driver 86 demodulates servo information recorded on storage media and compensates to position the read/write heads 19a, 19b precisely on a selected track of the data storage media.

The microprocessor 92 controls and monitors the functions in the drive 50. The program code is preferably stored in a read-only memory (ROM), while a RAM is preferred for storing variables, flags, status information, etc. The microprocessor 92 is responsible, in large part, for controlling the disk drive in accordance with the present invention. Any suitable microprocessor can be employed, such as, for example, a Motorola 68HC16 microprocessor or an Intel 8032 microprocessor.

The digital controller 88 decodes and error checks the data from the read channel 84 (using error correction coding (ECC)) and stores the data temporarily in a buffer memory. The controller 88 also ensures that data is written to, or read from, the correct track and sector of storage media. The controller 88, when directed by the microprocessor 92, sends data from the buffer 90 to the host device 96, or from the host device 96 to the buffer 90, in accordance with a predefined protocol, such as ATAPI (AT Attachment Packet Interface).

As in the prior art, the checking for servo miscues is performed on hardware within the digital controller 88. To relieve the burden on the microprocessor, hardware replaces miscue counting software that was executed by the microprocessor 92 in the prior art and used to determine if an error recovery sequence should be initiated. A hardware counter (a counter register) is used to count the number of miscues. A different counter is used to count each of the different miscues. If the number of consecutive miscues exceeds a predetermined threshold (stored in a threshold register) as determined by a comparator, then an interrupt is initiated and an error recovery sequence is activated. In this manner, an interrupt is only generated when a threshold is exceeded. This saves microprocessor bandwidth. Counter reset logic is also included within the digital controller. It should be noted that different thresholds can be set for different types of miscues. Moreover, instead of being predetermined, the threshold can be determined dynamically, responsive to various parameters and conditions during operation.

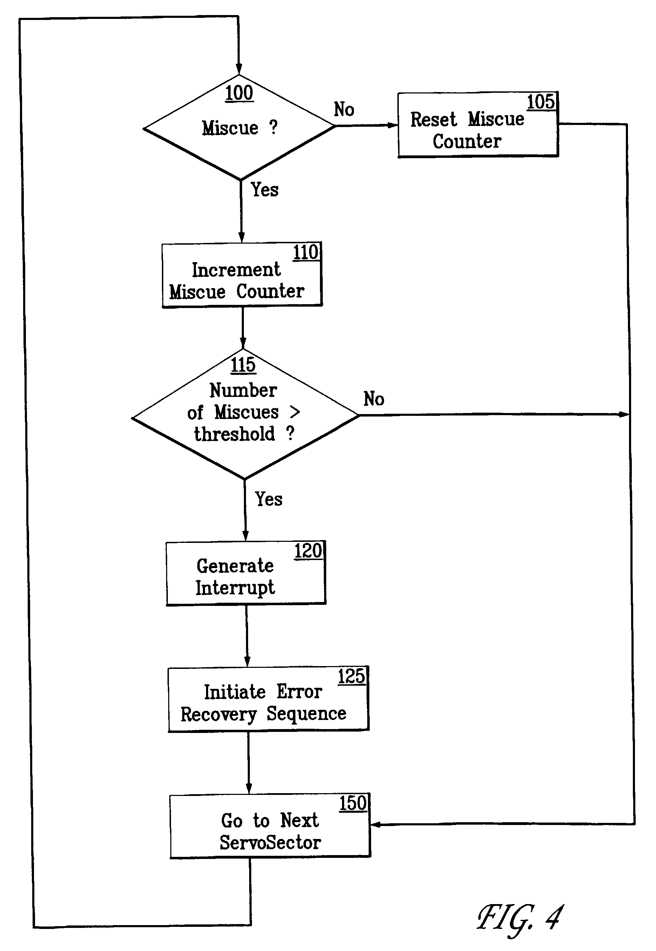

Figure 4 is a flow diagram illustrating an exemplary method of track following with servo miscue detection and interrupt generation in accordance with the present invention. At a servo sector, during track following, a miscue is checked for at step 100. If there is no miscue, then a miscue counter is reset at step 105. Preferably, the miscue counter is specific to the type of miscue being detected, although one counter can be used to count multiple types of miscues (e.g., one counter can be used to count multiple types of miscues so that an interrupt is generated when a predetermined number of consecutive miscues are detected, regardless of the type of miscue detected). After the miscue counter is reset, the operation continues at the next servo sector (step 150). If a miscue is detected at the servo sector at step 100, the associated miscue counter is incremented at step 110.

The value of the miscue counter is compared to a threshold at step 115 to determine if an interrupt and error recovery should be initiated. If the threshold is exceeded at step 115 (e.g., the number of consecutive miscues that has been detected is greater than a predetermined number, such as three, for example), then an interrupt is generated at step 120. An error recovery sequence is then initiated (in software) at step 125, after which processing continues at the next servo sector (step 150). Parts of the disk drive (e.g., the data transfer hardware) can be shut down or de-activated based on the type of miscue that is detected. If the threshold is not exceeded at step 115, then no interrupt is generated and processing continues at the next servo sector (step 150).

Because the digital controller uses additional hardware to check for miscues, the amount of microprocessor overhead is reduced. Thus, the number of servo samples / revolution can be increased.

The present invention may be employed in any data storage device and is by no means limited to uses described herein. Although illustrated and described herein with reference to certain specific embodiments, the present invention is nevertheless not intended to be limited to the details shown. Rather, various modifications may be made in the details within the scope and range of equivalents of the claims and without departing from the invention.

## Claims

1. A method of monitoring the track following of a servo system in a disk drive, comprising:
checking (100) a servo sector for a miscue;
incrementing (110) a miscue counter if there is a miscue, otherwise resetting (105) the miscue counter;
determining (115) if the value of the miscue counter exceeds a predetermined threshold; and
generating (120) a processor interrupt if the value of the miscue counter exceeds the predetermined threshold.

2. The method according to claim 1, further comprising initiating (125) an error recovery sequence responsive to the processor interrupt.

3. The method according to claim 1 or 2, further comprising shutting down a portion of the disk drive responsive to the miscue.

4. The method according to claim 1, 2 or 3, wherein the miscue is at least one of a missed servo gap, a misread servo gray code, and a position offset error.

5. The method according to one of claims 1 to 5, wherein the miscue counter is implemented in hardware.

6. The method according to one of claims 1 to 5, further comprising programming the predetermined threshold.

7. The method according to one of claims 1 to 6, wherein the predetermined threshold is three.

8. The method according to one of claims 1 to 7, wherein the determining is performed by a comparator implemented in hardware.

9. A system for a disk drive for monitoring a track following operation of a servo system, comprising:
a servo miscue detector for checking a servo sector for a miscue;
a miscue counter coupled to the servo miscue detector for counting a number ofmiscues;
counter reset logic coupled to the miscue counter;
a comparator for comparing the number of miscues to a predetermined threshold to generate an output;
generate interrupt logic for generating a microprocessor interrupt responsive to the output of the comparator; and
a microprocessor (92) to initiate an error recovery sequence responsive to the microprocessor interrupt.

10. The system according to claim 9, wherein the counter reset logic resets the miscue counter if a miscue is not detected by the servo miscue detector.

11. The system according to claim 9 or 10, wherein the generate interrupt logic generates a microprocessor interrupt if the number of miscues exceeds the predetermined threshold.

12. The system according to claim 9, 10 or 11, wherein the servo miscue detector, the miscue counter, the counter reset logic, the comparator, and the generate interrupt logic are implemented in hardware.

13. The system according to one of claims 9 to 12, wherein the miscue detector detects at least one of a missed servo gap, a misread servo gray code, and a position offset error.

14. The system according to one of claims 9 to 13, wherein the predetermined threshold is three.

15. The system according to one of claims 9 to 14, wherein the predetermined threshold is stored in a register and is selectively changeable.

16. The system according to one of claims 9 to 15, wherein the microprocessor shuts down a portion of the disk drive responsive to the miscue.
